# EUROPEAN PATENT APPLICATION

(11) **EP 2 555 304 A1**
(43) Date of publication of application: **06.02.2013**
(21) Application number: 11759320.2
(22) Date of filing: 18.03.2011
(51) Int. Cl.: H01M 10/04, H01M 10/0585, H01M 10/0587

(54) **BATTERY CELL**

(30) Priority: 26.03.2010 JP 2010073171
(71) Applicant: Mitsubishi Heavy Industries, Ltd., Tokyo 108-8215 (JP)
(72) Inventor: TANAKA Atsushi, Tokyo 108-8215 (JP); YOTSUMOTO Hiroaki, Tokyo 108-8215 (JP); TAJIMA Hidehiko, Tokyo 108-8215 (JP)
(74) Representative: Henkel, Breuer & Partner
(86) International application number: PCT/JP2011/056521
(87) International publication number: WO 2011/118514

(57) **Abstract**

Disclosed is a battery cell in which a first angle that is the angle between a collector (313) and an inclined face (316) that ranges from an end portion of the collector (313) to a surface (311) of a first electrode active material (314) is larger than a second angle that is the angle between the collector (313) and an inclined face (317) that ranges from the end portion of the collector (313) to a surface (312) of a second electrode active material (315).

## Description

### Technical Field

The present invention relates to a battery cell.
Priority is claimed on Japanese Patent Application No. 2010-073171, filed March 26, 2010, the content of which is incorporated herein by reference.

### Background Art

Conventionally, battery cells have been used as electric power sources of various electrical devices. Secondary batteries which are battery cells that can be charged and discharged repeatedly may be used as electric power buffers of power generators or the like, in addition to the electric power sources. As the battery cells, broadly, two types of battery cells of a wound type and a stacked type are known. Among these, the stacked type battery cell has a stack in which a positive electrode plate and a negative electrode plate are stacked via a separator. The positive and negative electrode plates are obtained by providing electrode active materials on both surfaces of a collector material.

In recent years, a technique capable of reducing the positional deviation between an electrode plate and a separator has been proposed (for example, Patent Literature 1). In Patent Literature 1, one electrode plate of the positive and negative electrode plates is packaged by a bag-like separator. Since the relative position between one electrode plate and the separator is regulated, a positional deviation does not occur easily between the electrode plate and the separator.

In order to package the electrode plate with the bag-shaped separator, for example, an electrode plate is arranged on a separator supported on a support or the like, and another separator is arranged on the electrode plate. Then, heating is made while pressing the upper separator toward the lower separator. As the upper and lower separators are melted and compression-bonded (hereinafter referred to as fusing) with heat around the electrode plate, a configuration in which the electrode plate is packaged by the bag-shaped separator is obtained.

### Citation List

### Patent Literature

[Patent Literature 1] Japanese Unexamined Patent Application, First Publication No. 2008-259819

### Summary of Invention

### Problem to be Solved by the Invention

As described above, there is a possibility that the following problems may occur in the electrode plate packaged by the separator. Since the upper and lower separators are thermally compression-bonded around the electrode plate, forces that bring the upper and lower separators into close contact with each other act even on corner portions of edges of the electrode plate as pressing forces. Particularly, on the top face of the electrode plate, the upper separator inclines downward and comes into contact with the corner portions, so that pressure acts intensively on the corner portions.

If the pressure acts intensively on the corner portions, the corner portions of the electrode active materials may be damaged and are readily lost. If the electrode active materials are lost, problems occur such that battery performance degrades as the amount of the electrode active materials on the electrode plate decreases, and damage to the separators is induced as the lost electrode active materials act as foreign matter.

The invention has been made in view of the above-described circumstances, and one object thereof is to provide a battery cell in which an electrode plate is packaged by a separator, loss of electrode active materials or damage to the separator does not occur easily, and safety is excellent.

### Means for solving the Problem

The invention adopts the following configuration in order to achieve the above object.
A battery cell related to one aspect of the invention includes a first electrode plate having a plate-shaped collector, a first electrode active material coated on a first face of the collector, and a second electrode active material coated on a second face of the collector; a first separator arranged to cover the first electrode active material; and a second electrode plate stacked on the first electrode plate through the first separator, and having different polarity from the first electrode plate. A first angle that is the angle between the collector and an inclined face that ranges from an end portion of the collector to a surface of the first electrode active material is larger than a second angle that is the angle between the collector and an inclined face that ranges from the end portion of the collector to a surface of the second electrode active material.

As the first angle is smaller than the second angle, the amount of the second electrode active material becomes larger than the amount of the first electrode active material, compared with a case where both the first and second electrode active materials have the first angle. It is possible to prevent degradation of battery performance. Additionally, compared with a case where the first electrode active material has the second angle rather than the first angle, a frictional force generated by the first separator can be reduced to prevent loss of the first electrode active material.

### Effects of the Invention

According to the battery cell of the invention, it is possible to provide a battery cell that allows prevention of degradation of battery performance, prevention of desorption of the electrode active materials, and damage prevention of the separators becomes possible and that is excellent in terms of safety.

### Brief Description of the Drawings

FIG. 1 is an exploded perspective view showing a schematic configuration of a battery cell related to the invention.
FIG. 2A is a cross-sectional view taken along a line A-A' of FIG 1.
FIG 2B is a cross-sectional view taken along a line B-B' in FIG. 1.
FIG. 3A is a plan view showing a first electrode plate and a covering body.
FIG. 3B is a cross-sectional view taken along a line C-C' of FIG. 3A.
FIG 4 is an explanatory view of the inclination angle that first and second inclined faces make with a principal face.
FIG. 5A is a cross-sectional view showing a forming method of a covering body.
FIG. 5B is a cross-sectional view showing a forming method of a covering body.
FIG. 6 is an explanatory view of an evaluation method of the inclination angles of the first and second inclined faces.
FIG. 7A is a plan view of a punching die.
FIG. 7B is a cross-sectional view taken along a line D-D' of FIG. 7A.
FIG. 8A is a cross-sectional view showing the condition of original plate of an electrode plate when being cut.
FIG. 8B is a cross-sectional view showing the condition of the original plate of the electrode plate when being cut.
FIG 8C is a cross-sectional view showing the condition of the original plate of the electrode plate when being cut.
FIG. 9 is an explanatory view showing forces acting on the original plate when the original plate is cut with a single-edged punching blade.
FIG. 10 is an explanatory view showing the deformation of the original plate when the original plate is cut with a double-edged punching blade.

### Description of Embodiments

Embodiments of the invention will be described below, referring to the drawings. In the drawings to be used for description, in order to make characteristic portions easily understood, the dimensions or scales of structures in the drawings may be made different from actual structures. All elements to be described in an embodiment are not necessarily indispensable to the invention. In the embodiment, the same constituent elements may be designated and shown by the same reference numerals, and the detailed description thereof may be omitted.

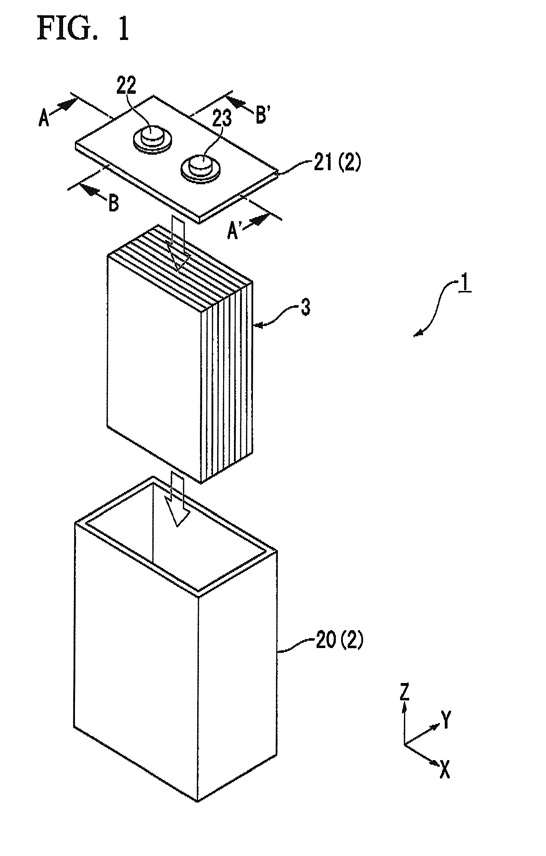

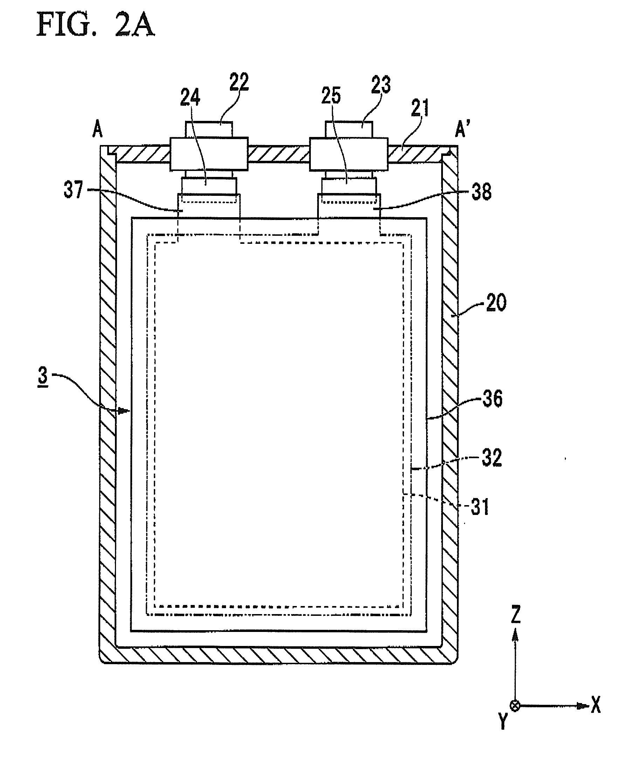

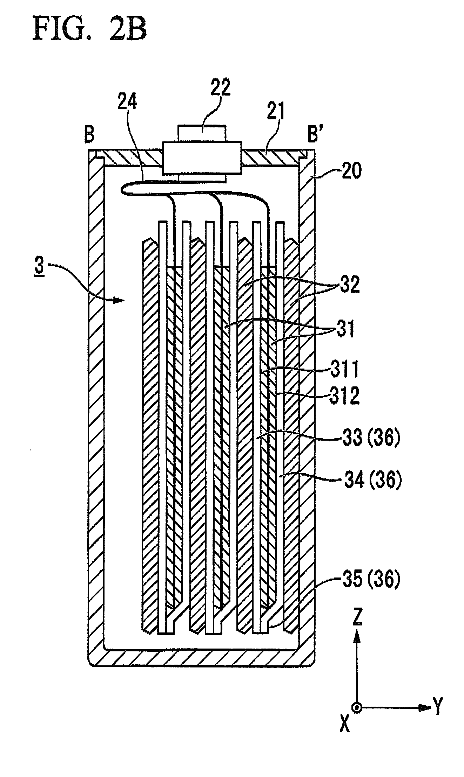

FIG. 1 is an exploded perspective view schematically showing a schematic configuration of a stacked battery cell related to the invention. FIG. 2A is a cross-sectional view taken along a line A-A' af FIG, 1. FIG. 2B is a cross-sectional view taken along a line B-B of FIG. 1. A battery cell 1 includes a hollow battery container 2, and a stack 3 accommodated inside the battery container 2. In the following description, an XYZ rectangular coordinate system corresponding to the width, thickness, and height direction of the battery container 2 is used.
The battery cell 1 is, for example, a lithium-ion secondary battery. An electrolyte is stored inside the battery container 2. Additionally, an insulating plate (not shown) is arranged between the stacked stack 3 and the inner wall of the battery container 2. In FIG. 2B, it seems that a large gap is between the width of the stack 3 in the Y-axis direction and the inner wall of the battery container 2 in the Y-axis direction. However, in practice, the dimensions of the widths of the insulating plate and the stack 3 in the Y-axis direction become almost the same as the dimension of the inner wall.

The battery container 2 includes a container body 20 having an opening, and a lid 21 that blocks the opening and is joined to the container body 20. The range of application of the invention is not limited to the shape or material quality of the battery container 2.
The outer shape of the container body 20 of the present embodiment is a rectangular frame structure, and the cross-sectional shape of the container body parallel to an opening face including the opening is a rectangular frame shape. The planar shape of the lid 21 is a rectangular shape. The container body 20 and the lid 21 are made of, for example, aluminum, and are joined to each other by welding or the like.

The lid 21 is provided with electrode terminals 22 and 23 that protrude toward the outside of the battery container 2. Transfer of electric power is enabled via the electrode terminals 22 and 23 inside and outside the battery cell 1. For example, the electrode terminal 22 is a positive electrode terminal, and the electrode terminal 23 is a negative electrode terminal.

As shown in FIGS. 2A and 2B, the stack 3 has a structure in which a first electrode plate 31 and a second electrode plate 32 are stacked alternately with the first separator 33 or second separator 34 interposed therebetween. The first separator 33 covers one face (principal face) 311 of the front and back of the first electrode plate 31. The second separator 34 covers the other face (principal face) 312 of the front and back of the first electrode plate 31. The first separator 33 and the second separator 34 are fused to each other and thereby joined and integrated by a joining portion 35 to constitute a covering body 36.

The first electrode plate 3 is a positive electrode plate, and the second electrode plate 32 is a negative electrode plate.
The planar shape of the first electrode plate 31 is, for example, a rectangular thin plate shape. The first electrode plate 31 includes an electrode tab 37. The electrode tab 37 extends in a direction that faces the electrode terminal 22, as seen in a plan view from the stacking direction (the Y-direction). The electrode tab 37 is electrically connected to the electrode terminal 22 via a connection conductive portion (lead) 24.
The planar shape of the second electrode plate 32 is, for example, a rectangular thin plate shape.
The second electrode plate 32 includes an electrode tab 38. The electrode tab 38 is provided at a portion that does not overlap the electrode tab 37 as seen in a plan view from the stacking direction, and extends in a direction that faces the electrode terminal 23. The electrode tab 38 is electrically connected to the electrode terminal 23 via a connection conductive portion (lead) 25.
The electrode active material (positive electrode active material) to be coated on the first electrode plate 31 is designed to fall within the dimensions of a negative electrode active material in the Z-direction. That is, the dimension of the positive electrode active material in the Z-direction is smaller than the dimension of the negative electrode active material in the Z-direction, and both ends of the positive electrode active material in the Z-direction are arranged inside both ends of the negative electrode active material in the Z-direction.

Next, the first electrode plate 31 and the covering body 36 will be described in detail. Here, the configuration in which the first electrode plate 31 that is a positive electrode plate is covered with a covering body 36 that is a bag-shaped separator will be described in detail. In addition, an electrode plate having different polarity from the first electrode plate 31, that is, the second electrode plate 32 that is a negative electrode plate may be configured similarly to the first electrode plate 31. Additionally, both the electrodes plates of the first electrode plate 31 and the second electrode plate 32 may be covered with the covering body 36.

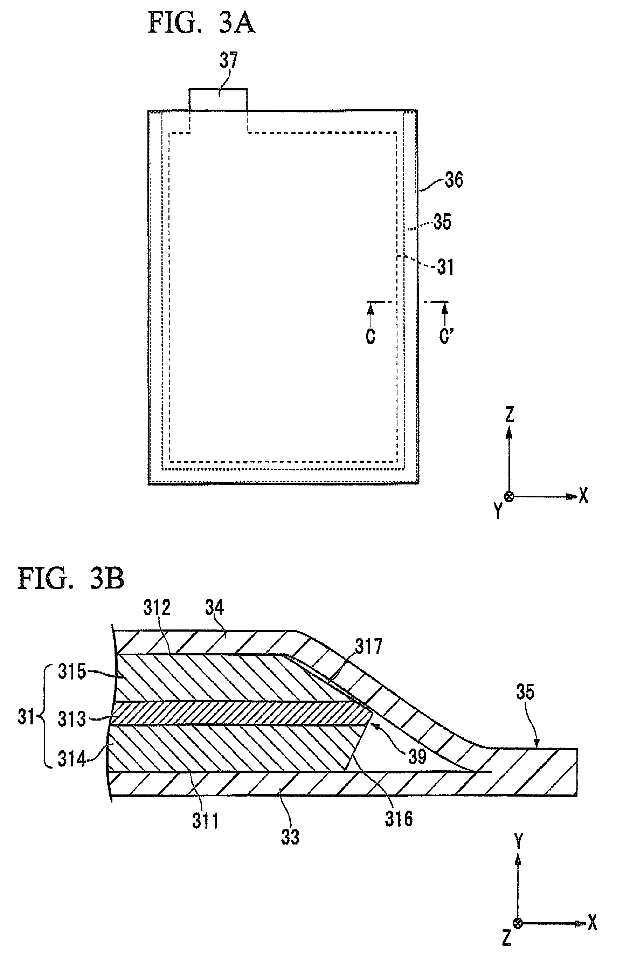

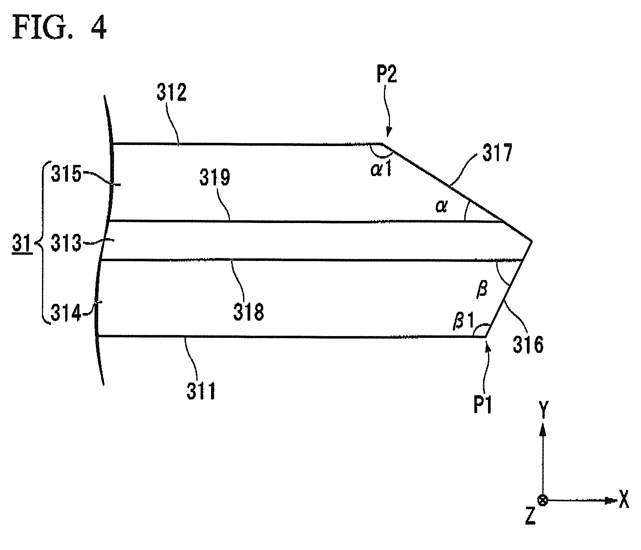

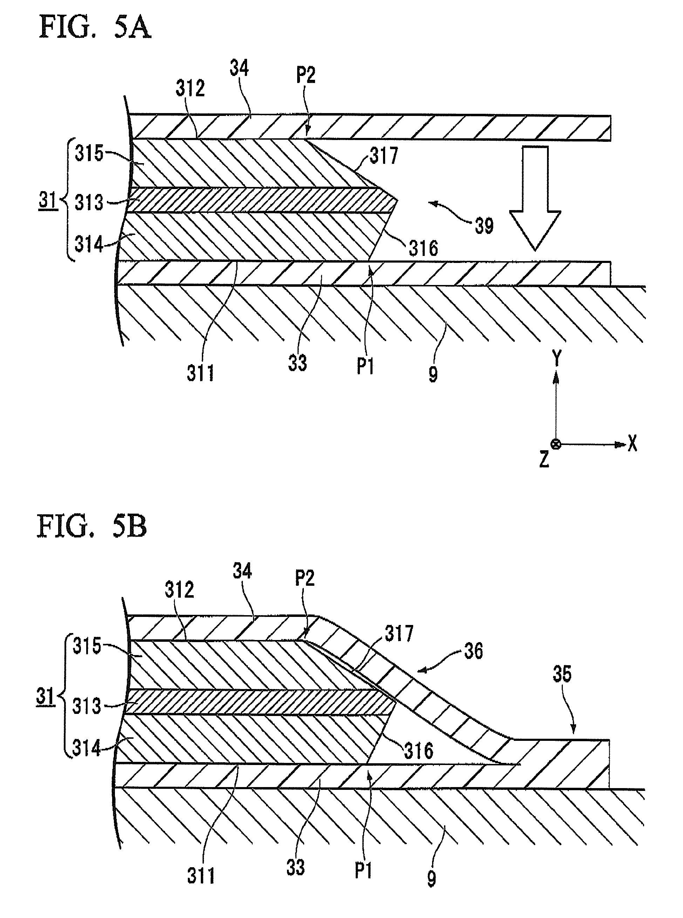

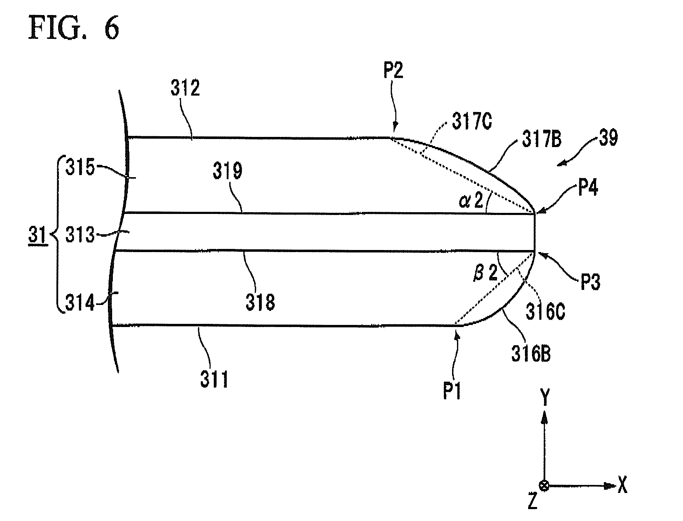

FIG 3A is a plan view showing the first electrode plate and the covering body. FIG 3B is a cross-sectional view taken along a line C-C' of FIG. 3A. FIG. 4 is an explanatory view of the inclination angle between the first inclined face, the second inclined face and the principal face of a collector. FIGS. 5A and 5B are cross-sectional views showing a forming method of the covering body. FIG. 6 is an explanatory view of an evaluation method of the inclination angles of the first and second inclined faces.

FIG 3A shows that the faces of the first electrode plate 31 are on the XZ plane. As shown in FIG. 3A, a joining portion 35 is provided so as to surround the first electrode plate 31 seen in a plan view from the stacking direction. Here, the joining portion 35 is provided continuously with portions along three sides except a side including the proximal end of the electrode tab 37 in the first electrode plate 31. Of course, the joining portion 35 may be provided successively with portions along four sides except the vicinity of the proximal end of the electrode tab 24 in the first electrode plate 31.
The covering body 36 is connected by the joining portion at portions along the three sides, and is formed in a bag shape having an opening at the portion along the other one side. The first electrode plate 31 is accommodated inside the covering body 36, and the electrode tab 37 is exposed to the outside of the covering body 36 through the opening of the covering body 36.

As shown in FIG 3B, the first electrode plate 31 that is a positive electrode plate has a collector 313, a first electrode active material 314, and a second electrode active material 315. The collector 313 is made of, for example, conductive foil, such as aluminum, and has a thickness of 5 µm to about 30 µm. Both of the first electrode active material 314 and the second electrode active material 315 are the same electrode active materials, and are, for example, a ternary material LiNiₓCo_{y}Mn_{z}O₂ (x+y+z=1) whose thickness is about 10 µm to 200 µm. In addition, the second electrode plate 32 that is a negative electrode plate is a carbon material (artificial graphite, natural graphite, or the like) with a thickness of approximately the half of the positive electrode plate.

The first electrode active material 314 is provided on one face (first face) of the collector 313. One face (first face) of the first electrode active material 314 is in contact with the collector 313, and the other face (second face) thereof is one face (first face) 311 (also referred to as the surface of the first electrode active material 314) of the first electrode plate 31. The second electrode active material 315 is provided on the other one face (second face) of the collector 313. One face (first face) of the second electrode active material 315 is in contact with the collector 313, and the other face (second face) of the first electrode plate 31 is the other face (second face) 312 (also referred to as the surface of the second electrode active material 315). The edge (end portion) 39 of the first electrode plate 31 is formed with a first inclined face 316 that is continuous with the first face 311 of the first electrode plate 31, and a second inclined face 317 that is continuous with the second face 312 of the first electrode plate 31.

A first inclination angle β at which the first inclined face 316 inclines with respect to the collector 313 is larger than a second inclination angle α at which the second inclined face 317 inclines with respect to the collector 313. For this reason, the angle α1 (the angle between the second face 312 and the second inclined face 317 of the first electrode plate 31) of a corner portion P2 shown in FIG 4 becomes larger than the angle β1 (the angle, that is, first angle between the first face 311 and the first inclined face 316 of the electrode plate 31) of a corner portion P1. Accordingly, as described in FIGS. 5A and 5B, the pressure and frictional force that are applied to the corner portion P2 by the second separator 34 become small compared to a case where the angles of the corner portions P1 and P2 are equal to each other (for example, a case where both the angles P1 and P2 are β1).

In a case where a shape formed by the first inclined face 316 and the second inclined face 317 is sharp, strength may become weak in this sharp portion compared to other portions of an electrode plate. In this case, there is a possibility that bending of the electrode plate may occur, and there is a possibility that a tear of a separator may be induced in the sharp portion.
Thus, in order to prevent these, in the present embodiment, it is designed so that a sum of the first inclination angle β and the second inclination angle α is about 90°, and the range of the second inclination angle α is 0<α<45°, and the range of the first inclination angle α is 45°<β<90°. For this reason, the angle α1 of the corner portion P2 formed by the second face 312 and the second inclined face 317 of the first electrode plate 31 becomes a larger angle than the angle β1 of the corner portion P1 formed by the first face 311 of the first electrode plate 31 and the first inclined face 316. That is, since α+β≈90° is satisfied, α1>β1 is satisfied, maintaining the relationship of α1+β≈270°, Specifically, 135°<α1<180° and 90°<β1<135° are satisfied.
Of course, since the shape need only be provided such that the strength of the above sharp portion is maintained and a tear of a separator does not occur, in some cases, a+β≈90° may not be satisfied, for example, 60°≤α+β≤90° may be satisfied.

In order to form the covering body 36, as shown in FIG. 5A, the first separator 33 is arranged on a support 9 for fusion, and the first electrode plate 31 is arranged on the first separator 33. Then, the first electrode plate 31 is arranged so that the corner portion P1 is in contact with the first separator 33.
Thereafter, the second separator 34 is arranged on the first electrode plate 31.
Then, a heat sealer (not shown) is applied to a position (position indicated by an outlined arrow shown in FIG. 5A) close to the first electrode plate 31 outside the end portion 39 of the first electrode plate 31, and the first separator 33 and the second separator 34 are fused together, while pressing the second separator 34 toward the first separator 33 by this heat sealer. Thereby, as shown in FIG. 5B, the joining portion 35 is formed, and the bag-shaped covering body 36 is formed in a state where the first separator 33 and second separator 34 are integrated together and the first electrode plate 31 is packaged.
Since the first separator 33 is supported by the support 9 during fusion and is held flat, the pressure and frictional force that are applied to the corner of the corner portion P1 of the first electrode active material 314 is small compared to the corner portion P2 of the second electrode active material 315. At this time, the joining portion 35 is configured so as to be arranged on the first electrode active material 314 side in the Y-direction if the position of the collector 313 is regarded as a center. That is, the joining portion 35 is arranged on the opposite side of the second electrode active material 315 with the collector 313 interposed therebetween, in the Y-direction.

When the first separator 33 and the second separator 34 are fused together, the second separator 34 deforms toward the first separator 33 from on the second face 312 of the first electrode plate 31. Additionally, since the heat sealer presses the second separator 34 towards the first separator 33 for compression bonding, the second separator 34 is pulled toward the joining portion 35, and a frictional force is applied to the corner of the corner portion P2 of the second electrode active material 315. This originates from the fact that the joining portion 35 is formed in proximity to the end portion 39 in the X-direction, in order to prevent the first electrode plate from moving inside the covering body 36 that is a bag-shaped separator (in order to fix the position of the first electrode plate). Here, the distance from the joining portion 35 to the end portion 39 is about 0.5 mm in the X-direction.
This distance is a distance estimated so that the heat sealer does not come into contact with an electrode plate even if an error occurs when the electrode plate is arranged at the support 9, and is a distance to be expected in terms of a mechanism for performing fusing at as close a position as possible to the electrode plate. Accordingly, similarly to when the first electrode plate 31 is formed with the covering body 36, even in a case where the second electrode plate 32 that is a negative electrode plate is formed with the covering body, the distance in the X-direction from the joining portion of the covering body to the end portion of the second electrode plate 32 becomes the same as that of the distance in the X-direction between the end portion 39 of the first electrode plate 31, and the joining portion 35.

In a case where the angle α1 of the corner portion P2 is larger than the angle β1 of the corner portion P1 as described above, compared to a case where the angle of the corner portion P2 is β1, the pressure and frictional force that are applied to the corner portion P2 are distributed, and loss of the second electrode active material 315 is prevented. Since loss of the second electrode active material 315 does not occur easily like this, damage to the covering body 36 does not occur easily. Specifically, in the case of 135°<α1<180°, a good result is obtained from a viewpoint of prevention of the loss.

Although the first face 311 and second face 312, the first inclined face 316 and the second inclined face 317, and an interface 318 and an interface 319 of the first electrode plate 31 are shown in straight lines in FIG. 4, these faces may include irregularities in practice. These faces can be specified by processing the positions of points on faces, which are measures, for example, using an SEM or the like, by various approximation techniques or statistical techniques, such as the least-square method, and smoothing the irregularities.

When charging and discharging are repeated using an electrode plate immersed in an electrolyte using a battery cell, the first inclined face 316 and the second inclined face 317 become curved faces as shown in FIG 6 (referred to as a curved first inclined face 316B and a curved second inclined face 317B) due to changes with time. As a result, it may be difficult to specify the angles α and β in the end portion 39 of the first electrode plate 31.
In such a case, in a cross-section in the XY plane of the first electrode plate 31, a face 316C passing through an end point P3 of the interface 318 between the collector 313 and the first electrode active material 314 and the corner portion P1 is regarded as the first inclined face. Then, the angle β2 that the face 316C and the interface 318 make is set to the above β. Additionally, a face 317C passing through an end point P4 of the interface 319 between the collector 313 and the second electrode active material 315 and the corner portion P2 is regarded as the second inclined face. Then, the angle α2 that the face 317C and the interface 319 make is determined as the above α.

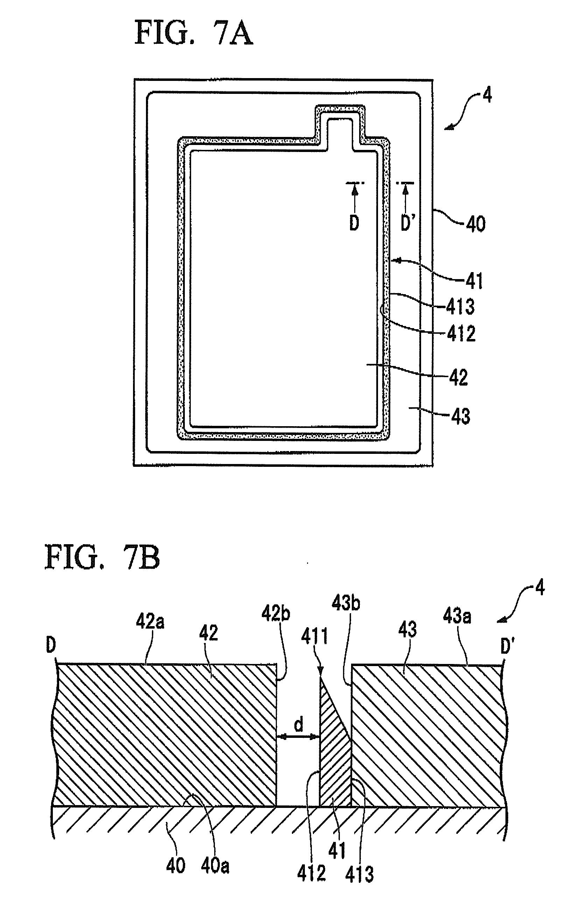

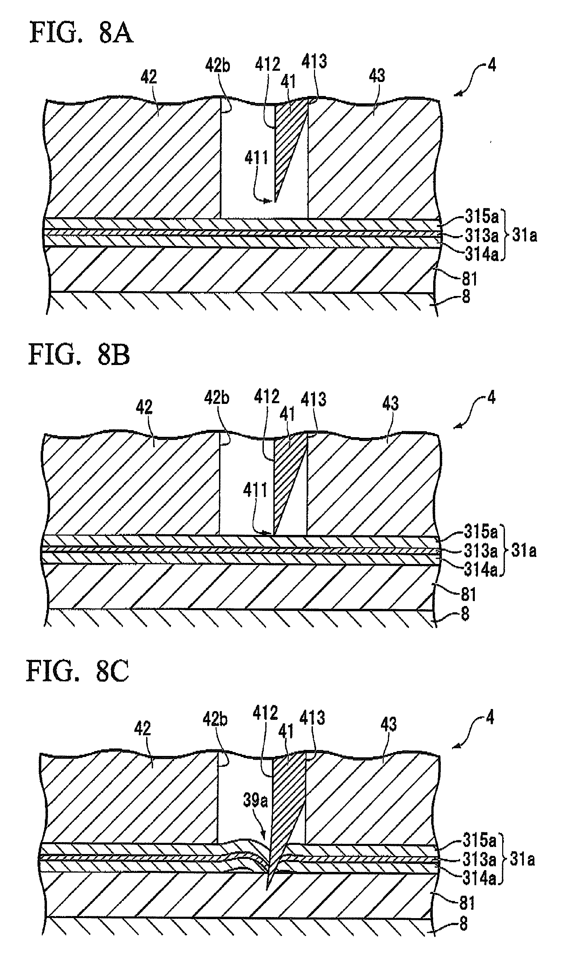

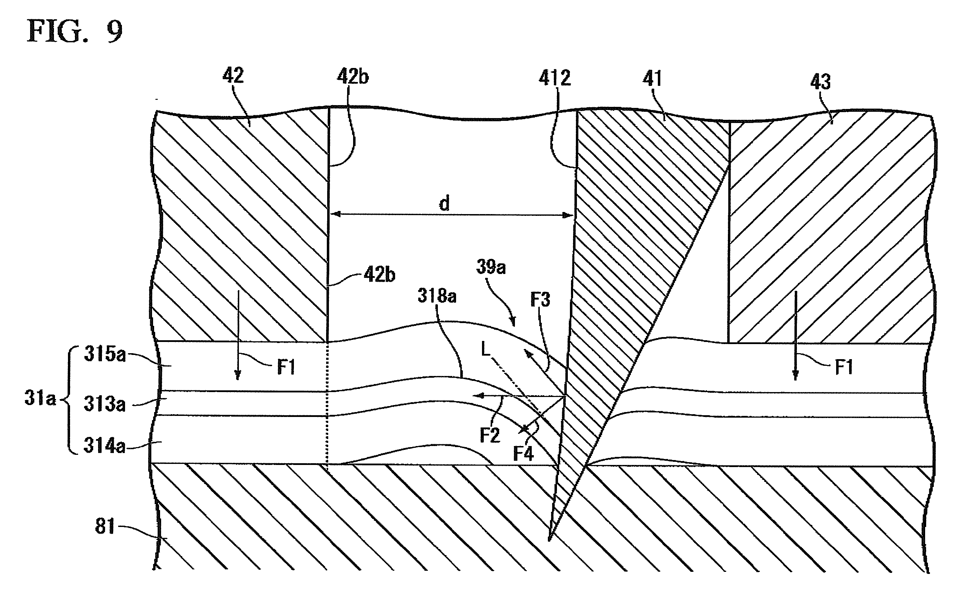

Next, an example of a manufacturing method of the first electrode plate 31 will be described. FIG. 7A is a plan view of a punching die. FIG. 7B is a cross-sectional view taken along a line D-D' of FIG. 7A. FIGS. 8A to 8C are cross-sectional views showing the condition when an original plate of the electrode plate is cut, and FIG. 9 is an explanatory view showing forces acting on the original plate when the original plate is cut.

A punching die 4 shown in FIG. 7A has a supporting substrate 40, a punching blade 41, a first pressing portion 42, and a second pressing portion 43. The punching die 4 is, for example, a Thomson die, and the punching blade 41 is a Thompson blade (Thomson cutter). The supporting substrate 40 is, for example, a plate-shaped, and is arranged to face the original plate. As shown in FIG. 7B, the punching blade 41, the first pressing portion 42, and the second pressing portion 43 are arranged at and fixed to a opposing face 40a that is the face of the supporting substrate 40 that faces the original plate.

The punching blade 41 is obtained, for example, by bending a beltlike body whose plate thickness is about 0.5 mm to 2.0 mm in the shape of the first electrode plate 31. In the present embodiment, a single-edged blade is adopted as the punching blade 41. An inner peripheral face 412 of the punching blade 41 is substantially perpendicular to the opposing face 40a, and the distal end of the inner peripheral face 412 becomes a blade tip 411.

The first pressing portion 42 and the second pressing portion 43 press the original plate toward the support in a state where the original plate is supported by the support or the like during punching. The first pressing portion 42 and the second pressing portion 43 are made of elastic bodies, such as rubber and sponge.

The first pressing portion 42 is provided inside the inner peripheral face 412 of the punching blade 41 when the opposing face 40a is seen in a plan view. The second pressing portion 43 is provided outside an outer peripheral face 413 of the punching blade 41. The dimensions (thicknesses) of first pressing portion 42 and the second pressing portion 43 in the normal direction of the opposing face 40a are set so that a surface 42a of the first pressing portion 42 and a surface 43a of second pressing portion 43 protrude more than the blade tip 411. Here, the surface 42a and the surface 43a are flush with each other. That is, the surface 42a and the surface 43a are parallel to the opposing face 40a, and the distances from the surface 42a and the surface 43a to the opposing face 40a are equal to each other.

A side face 42b of the first pressing portion 42 is provided at a certain distance from the blade tip 411. This distance, that is, spacing d, is set according to the forming material or plate thickness of the original plate. In the present embodiment, angles, such as α and β, are obtained in desired ranges by leaving about a distance of about 5 mm between the side face 42b and the blade tip 411.

The second pressing portion 43 is provided so that a side face 43b is in contact with the outer peripheral face 413 of the punching blade 41, If the side face 43b is in contact with the outer peripheral face 413, in the process of punching, an original plate of an electrode plate can be pressed near the punching blade 41, and the positional deviation between the original plate and the punching blade 41 can be suppressed effectively.

In order to punch the first electrode plate 31 by the punching die 4, as shown in FIG. 8A, the punching die 4 is made to abut on an original plate 31a. In detail, first, a protective sheet 81 is arranged on a support 8 for punching, and the original plate 31a is arranged on the protective sheet 81. The protective sheet 81 prevents the support 8 and the punching blade 41 from coming into direct contact with each other. The original plate 31a is obtained by coating the first electrode active material 314a and the second electrode active material 315a on both faces (the first face and the second face) of the collector 313a, respectively. The original plate 31 a is arranged so that the first electrode active material 314a is in contact with the protective sheet 81.

Next, the opposing face 40a of the punching die 4 shown in FIG, 7B is made to face the original plate 31a shown in FIG. 8A, and the first pressing portion 42 and the second pressing portion 43 of the punching die 4 are brought into contact with the surface of the second electrode active material 315a. In this stage, the blade tip 411 does not come into contact with the second electrode active material 315a of the original plate 31a.

Next, as shown in FIG. 8B, the punching die 4 is moved toward the original plate 31a. Then, the first pressing portion 42 and the second pressing portion 43 are pressed and compressively deformed toward the support 8, and the blade tip 411 comes into contact with the original plate 31 a. Since the punching blade 41 that is a single-edged blade is arranged so as to enter the original plate 31a at an angle of about 90°, the inner peripheral face 412 has an angle of about 90° with respect to the original plate 31a.

If the punching die 4 is further moved toward the original plate 31a as shown in FIG. 8C, the blade tip 411 protrudes from the first pressing portion 42 and the second pressing portion 43, and the blade tip 411 cuts the original plate 31a. Since the first pressing portion 42 and the second pressing portion 43 press the original plate 31a, the relative position between the original plate 31a and the punching die 4 can be regulated, and the blade tip 411 can be brought into contact with a predetermined position of the original plate 31a. The original plate 31a located inside the punching blade 41 is punched as the first electrode plate 31. In FIG 8C, since the punching blade 41 has a plate thickness, the original plate 31 is pushed wide by a distance according to the plate thickness in directions in which the cutting faces on both sides of the punching blade 41 are separated from each other.

As shown in FIG 9, the portions of the original plate 31a where the first pressing portion 42 and the second pressing portion 43 abut on the original plate 31a are pressed with pressing forces F1 of the first pressing portion 42 and the second pressing portion 43, and the positions thereof are regulated. The cut face of the original plate 31a located on the inner peripheral face 412 side of the punching blade 41 is a portion that becomes the second inclined face 317 of the first electrode plate 31.

A cut portion 39a receives a compressive force F2 in a direction along the principal face of the original plate 31a from the inner peripheral face 412 of the punching blade 41. Since the original plate 31a between the inner peripheral face 412 and the side face 42b of the first pressing portion 42 is not pressed by the first pressing portion 42 due to the presence of the spacing d, upward deformation is permitted, resulting in deflection deformation. Thereby, the cut face of the first electrode active material 315a inclines to the surface of the original plate 31a, and becomes the second inclined face 317 of the first electrode plate 31.

The tangential line of the second face of the collector 313a in the cut face of the original plate 31a that is in contact with the inner peripheral face 412 of the punching blade 41 is defined as L. At this time, the compressive force F2 can be decomposed into a component force F3 parallel to the tangential line L, and a component force F4 perpendicular to the tangential line L. The first electrode active material 314a in the cut portion 39a is pressed and compressively deformed toward the protective sheet 81 by the component force F4, and becomes the first inclined face 316 of the first electrode plate 31. As such, the second inclined face 317 shown in FIG 4 is an abutting face that abuts on the inner peripheral face 412 of the blade 41 shown in FIG. 9. Additionally, the first inclined face 316 shown in FIG 4 is an abutting face that abuts on the protective sheet 81. From this, the angle that the first inclined face 316 and the second inclined face 317 shown in FIG. 4 make becomes approximately equal to (here, approximately 90°) the angle that the inner peripheral face 412 shown in FIG 9 makes with the surface of the protective sheet 81.

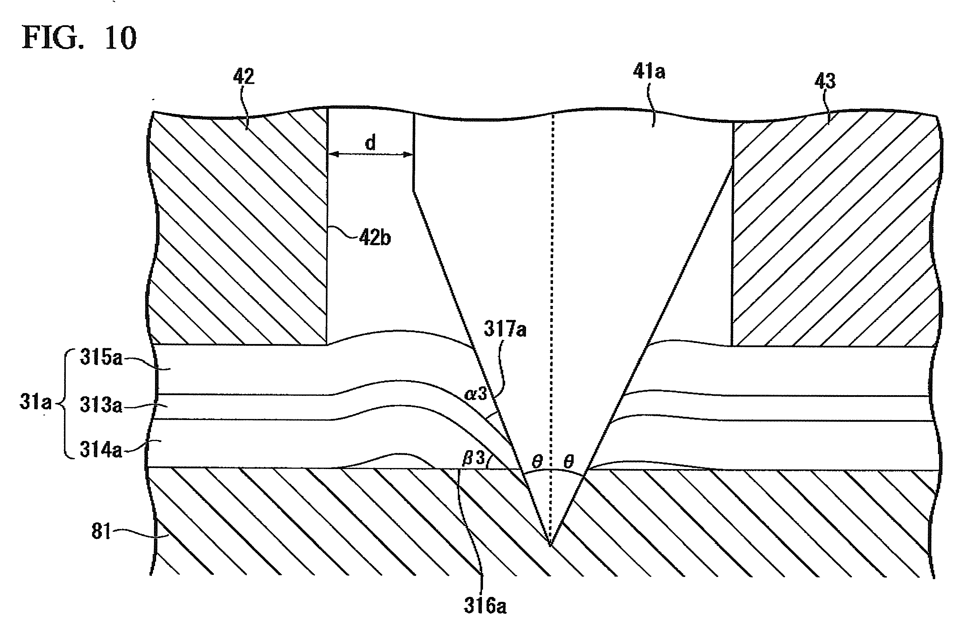

Although punching using the single-edged punching blade is described in FIG. 9, as shown in FIG. 10, a double-edged punching blade may perform punching. FIG. 10 is different from FIG. 9 in that a double-edged punching blade 41 a is used. The punching blade 4 1 a includes a blade tip having a total angle of 2θ.
The blade tip of the punching blade 41 a has an inclination angle of θ from an imaginary line perpendicular to the surface of the protective sheet 81. In this case, the relationship between α3 equivalent to the above-described α and β3 equivalent to the above-described β becomes α3<β3 and α3+β3+θ≈90°. However, if the shape formed by a first inclined face 316a and a second inclined face 317a is sharp, strength may become weak in this sharp portion compared to other portions of an electrode plate. Therefore, there is a possibility that bending of the electrode plate may occur, and there is a possibility that a tear of a separator may be induced in the sharp portion. Since the punching blade 41a is not a single-edged blade, α3+β3≈90° cannot be satisfied. However, since the above shape need only be provided such that the strength of the sharp portion is maintained and a tear of a separator does not occur, for example 60°≤α3+β3≤90° may be satisfied. In this case, a double-edged punching blade of 0°≤θ≤30° is used.
Even in this case, the same effects as the effects described in FIGS. 5A and 5B are obtained.

Although the preferable embodiments of the invention have been described above, the technical range of the invention is not limited to the above embodiments. Additions, omissions, substitutions, and other modifications can be made without departing from the concept of the present invention. Accordingly, the present invention is not to be considered as being limited by the foregoing description, and is only limited by the scope of the appended claims. Although the above embodiment is a stacked battery cell, a wound type battery cell can also be applied when the positive electrode plate or the negative electrode plate is covered with the covering body.

### Industrial Applicability

According to the battery cell of the invention, it is possible to provide a battery cell that allows prevention of degradation of battery performance, prevention of desorption the electrode active materials, and damage prevention of the separators becomes possible and that is excellent in terms of safety can be provided.

### Reference Signs List

- 1:: BATTERY CELL
- 2:: BATTERY CONTAINER
- 3:: STACK
- 4:: PUNCHING DIE
- 8, 9:: SUPPORT
- 20:: CONTAINER BODY
- 21:: LID
- 22, 23:: ELECTRODE TERMINAL
- 24, 25:: CONNECTION CONDUCTIVE PORTION (LEAD)
- 31:: FIRST ELECTRODE PLATE (POSITIVE ELECTRODE PLATE)
- 31a:: ORIGINAL PLATE
- 32:: SECOND ELECTRODE PLATE (NEGATIVE ELECTRODE PLATE)
- 33:: FIRST SEPARATOR
- 34:: SECOND SEPARATOR
- 35:: JOINING PORTION
- 36:: COVERING BODY
- 37:: ELECTRODE TAB
- 38:: ELECTRODE TAB
- 39:: EDGE (END PORTION)
- 39a:: CUT PORTION
- 40:: SUPPORTING SUBSTRATE
- 40a:: OPPOSING FACE
- 41:: PUNCHING BLADE
- 42:: FIRST PRESSING PORTION
- 42a:: SURFACE
- 42b:: LATERAL FACE
- 43:: SECOND PRESSING PORTION
- 43a:: SURFACE
- 43b:: LATERAL FACE
- 81:: PROTECTIVE SHEET,
- 311:: ONE FACE (PRINCIPAL FACE OF FIRST ELECTRODE PLATE)
- 312:: OTHER FACE (PRINCIPAL FACE OF FIRST ELECTRODE PLATE)
- 313, 313A:: COLLECTOR MATERIAL
- 314, 314A:: FIRST ELECTRODE ACTIVE MATERIAL
- 315, 315A:: SECOND ELECTRODE ACTIVE MATERIAL
- 315, 316B:: FIRST INCLINED FACE
- 316c:: FACE
- 317, 317b:: SECOND INCLINED FACE
- 317c:: FACE
- 318, 318A, 319:: INTERFACE
- 411:: BLADE TIP
- 412:: INNER PERIPHERAL FACE
- 413:: OUTER PERIPHERAL FACE
- D:: DISTANCE
- F1:: PRESSING FORCE
- F2:: COMPRESSIVE FORCE
- F3, F4:: COMPONENT FORCE
- L:: TANGENTIAL LINE
- P1, P2:: CORNER PORTION
- P3, P4:: END POINT

## Claims

1. A battery cell comprising:
a first electrode plate having
a plate-shaped collector,
a first electrode active material coated on a first face of the collector, and
a second electrode active material coated on a second face of the collector;
a first separator arranged to cover the first electrode active material; and
a second electrode plate stacked on the first electrode plate through the first separator, and having different polarity from the first electrode plate,
wherein a first angle that is the angle between the collector and an inclined face that ranges from an end portion of the collector to a surface of the first electrode active material is larger than a second angle that is the angle between the collector and an inclined face that ranges from the end portion of the collector to a surface of the second electrode active material.

2. The battery cell according to Claim 1, further comprising:
a second separator arranged to cover the second electrode active material; and
a joining portion, wherein the first separator and the second separator are fused to each other and thereby joined by the joining portion in the vicinity of the end portion,
wherein the joining portion is provided on the first electrode active material side in a normal direction of the first electrode plate.

3. The battery cell according to Claim 2,
wherein a sum of the first angle and the second angle is approximately 60° or more and 90° or less.
